(19) Europäisches Patentamt

European Patent Office

Office européen des brevets

(11) Veröffentlichungsnummer: **0 407 372 A1**

# EUROPÄISCHE PATENTANMELDUNG

(21) Anmeldenummer: 90890186.1

(51) Int. Cl.⁵: **B60R 19/42, B60J 5/04**

(22) Anmeldetag: **20.06.90**

(30) Priorität: 05.07.89 AT 1634/89

(43) Veröffentlichungstag der Anmeldung:
**09.01.91 Patentblatt 91/02**

(84) Benannte Vertragsstaaten:
**BE CH DE ES FR GB IT LI NL SE**

(71) Anmelder: **Austria Metall Aktiengesellschaft**

**A-5282 Braunau am Inn(AT)**

(72) Erfinder: **Garnweidner, Peter**

**A-5112 Lamprechtshausen 429a(AT)**
Erfinder: **Üblacker, Peter**
**Schilfgasse 4**
**A-5111 Bürmoos(AT)**

(74) Vertreter: **Hain, Leonhard, Dipl.-Ing.**
**Tal 18/IV**
**D-8000 München 2(DE)**

(54) **Rammschutzträger für Kraftfahrzeugtüren und Seitenwände.**

(57) Rammschutzträger für Kraftfahrzeugtüren und Seitenwände, der an seiner der Türaußenwand (6, 7) zu- und abgewandten Längsseite Begrenzungsflansche aufweist, wobei wenigstens an einem Trägerende der zwischen den Begrenzungsflanschen (1, 2) befindliche Teil (3) des Trägers entfernt ist, mindestens einer der verbleibenden Flansche (4) zum anderen hin gebogen und im weiteren zum Ende hin gehenden Verlauf der Flansche (4) die zueinander weisenden Längsflächen der beiden Flanschen aneinander liegen und in diesem Bereich die Befestigung für den Türrahmen (6, 7) angeordnet ist.

_Fig. 1_

## RAMMSCHUTZTRÄGER FÜR KRAFTFAHRZEUGTÜREN UND SEITENWÄNDE

Es ist bekannt, Insaßen von Kraftfahrzeugen bei seitlichen Kollisionen durch den Einbau von Trägern in Türen und Seitenwände zu schützen. Diese Rammschutzträger sind an den Türrahmen oder Fahrzeug-Aufbauholmen angeordnet und verstärken die Schutzwirkung der Außenverkleidung bei Unfällen. Üblicherweise sind diese Rammschutzträger in Stoßstangenhöhe angebracht. Bei heutigen Konstruktionen wird eine konstante Widerstandskraft über einen großen Bereich der Verformung gefordert. Nur so kann eine maximale Energie beim Kollisionsvorgang durch diesen aufgezehrt werden. Es kommt dabei im Bereich der Krafteinleitung auf dem Rammschutzträger zu sehr großen Verformungen. Diese führen teilweise bis zum Bruch des Rammschutzträgers an dieser Stelle gegen Ende seines möglichen Deformationsweges, da er in diesem Bereich die maximal mögliche plastische Verformung überschreitet. Es kann dazu kommen, daß Teile des Rammschutzträgers danach in den Fahrgastraum gelangen und Insaßen verletzen.

Um eine so hohe Belastung im Bereich der Krafteinleitung zu vermeiden, ist in der FR-PS 2.207.039 ein Rammschutzträger beschrieben, der an den Türscharnieren an der Scharnierseite bzw. an der Schloßseite an eigenen Verstärkungen angeordnet ist. Zusätzlich werden eigene Energieabsorber zwischen Rammschutzträger und dem benachbarten Fahrgastsitz erläutert, wodurch ebenfalls die Belastung im Kollisionsfall an den Krafteinleitstellen reduziert werden. Diese Bauweise ist technisch aufwendig teuer und erlaubt dem Konstrukteur nur eine geringe Gestaltungsfreiheit bei der Formgebung der Tür als üblich.

Durch diese Bauweise kann eine zusätzliche Verformung im Bereich der Anbindungsstellen des Rammschutzträgers an den Holmen erzielt werden. Es erfolgt somit eine geringe Dehnung am Krafteinleitungspunkt. Die verschiedenen Längen und Formen der verbleibenden Flansche bewirken im Verformungsfall des Rammschutzträgers eine unterschiedliche Dehnung dieser beiden Flansche. Bei richtiger Auslegung führt das dazu, daß einer der beiden Flansche abreißt und der Rammschutzträger eine zusätzliche Verformung in diesem Bereich erfährt. Dabei erfolgt durch diese Verformung auch eine zusätzliche Verlängerung des Rammschutzträgers in Längserstreckung. Dadurch wird die Verformung im Lasteinleitpunkt verringert. Der Rammschutzträger bleibt durch den anderen nicht brechenden Flansch auch nach vollständiger Deformation am Holm befestigt und ist gegen Eindringen in den Fahrgastraum gesichert.

In weiterer erfindungsgemäßer Ausgestaltung kann diese so ausgeführt sein, daß der die Befestigung aufnehmende Teil der aneinanderliegenden Flansche vom innenliegenden Begrenzungsflansch wegweist.

Dadurch ist auch noch zusätzlich eine Verschiebung des Rammschutzträgers nach innen möglich und durch die günstige geometrische Ausbildung kommen die vorhin beschriebenen Effekten besonders gut zur Auswirkung.

Besonders günstig ist es, daß der zum anderen Flansch hin gebogene verbleibende Teil des äußeren Flansches normal auf die Längsachse steht und die Kontur der aneinander liegenden Bereiche der Flansche in ihren gemeinsamen zum Ende des Rammschutzträgers gehenden Verlauf zuerst über die äußere Kontur des inneren Flansches ragt, in diesem Bereich einen zur Längserstreckung etwa parallelen Verlauf hat und danach zum Außenflansch hin gebogen ist und in einem spitzen Winkel zur Längsachse des Rammschutzträgers steht.

Durch die verschieden langen Flansche, wobei der äußere länger als der innere auf Zug belastete ausgeführt ist, kann der äußere eine größere Verformung aufnehmen als der innere. Dadurch bricht der innere Flansch und läßt die Konstruktion nach innen sinken und verlängert zusätzlich die Längserstreckung des Rammschutzträgers. Durch den Bereich, der über die äußere Kontur des inneren Flansches ragt und dieser Bereich einen zur Längserstreckung parallelen Verlauf hat, wird eine noch größere Verlängerung in Längserstreckung erreicht.

Die Verlänerung der Längserstreckung kann erfindungsgemäß auch so erfolgen, daß der verbleibende äußere Flansch im Bereich des entfernten Teiles in einer zur Längserstrekkung des Trägers parallelen Wellenform gebogen ist und im weiteren zum Ende gehenden Verlauf am anderen zur Längsachse parallel laufenden Flansch anliegt.

In weiterer Ausgestaltung kann die Befestigung aus einer Hülse mit Gewinde bestehen, die in dem im spitzen Winkel zur Längsachse stehenden Teil der aneinander zu liegen kommenden Flanschteile formschlüssig angeordnet ist.

Durch zusätzliche Kerben oder Schlitze wird der Innenflansch zusätzlich geschwächt. Dadurch wird eine größere Sicherheit der Rißbildung und des Bruches des Innenflansches in diesem Bereich erzielt. Erfolgt die Befestigung in Form eines Loches, in dem eine Hülse oder ein Bolzen angeordnet ist, bewirkt das eine Materialschwächung in beiden Flanschen, wodurch die Kerbwirkung in dem durch Zug belasteten Innenflansch zum Bruch führt.

Es ist weiter günstig, daß die Hülse der Befestigung den normal auf die Längserstreckung stehenden Teil des Außenflansches in etwa berührt oder in einer Öffnung im verbleibenden Flansch ragt.

Dadurch stützt die Hülse den nach außen gebogenen Teil im Kollisionsfall ab oder wird durch die sich deformierende Öffnung im verbleibenden Flansch festgehalten und wirkt wie ein Hebel, der die Zugwirkung im Innenflansch knapp vor der Befestigung erhöht, da durch die stärkere Verdrehung der Hülse eine zusätzliche Kraftkomponente eingeleitet wird. Die Hülse kann mittels aufgeformten Wulstes oder ähnlichem angebracht sein.

Die Erfindung wird anhand der nachstehenden Zeichnungen beschrieben. Es zeigen:

Fig. 1 einen erfindungsgemäßen Rammschutzträger.

Fig. 2 das Ende des Rammschutzträgers als Detail im unverformten Zustand.

Fig. 3 dieses Detail nach Verformung des Trägers.

Fig. 4 einen anderen erfindungsgemäßen Rammschutzträger.

Fig. 5 diesen Rammschutzträger während der Verformung.

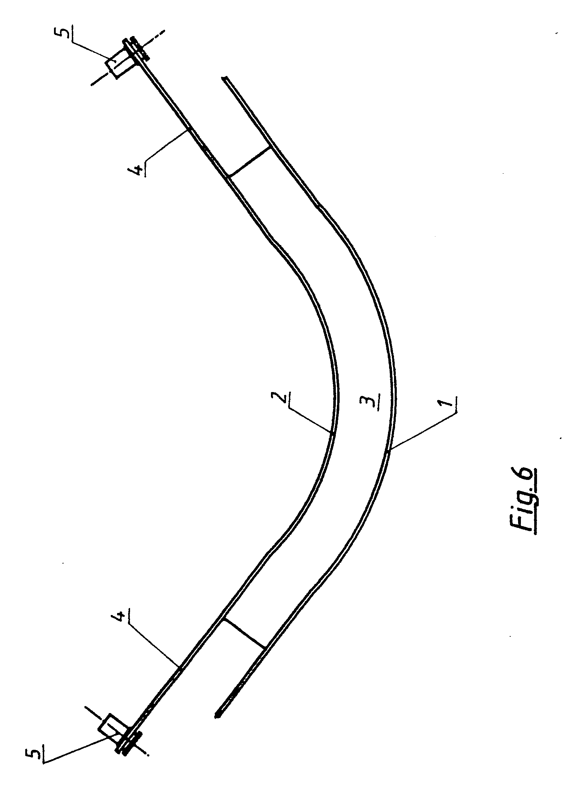

Fig. 6 diesen Rammschutzträger nach Bruch des inneren Begrenzungsflansches und Beendigung seiner Verformung.

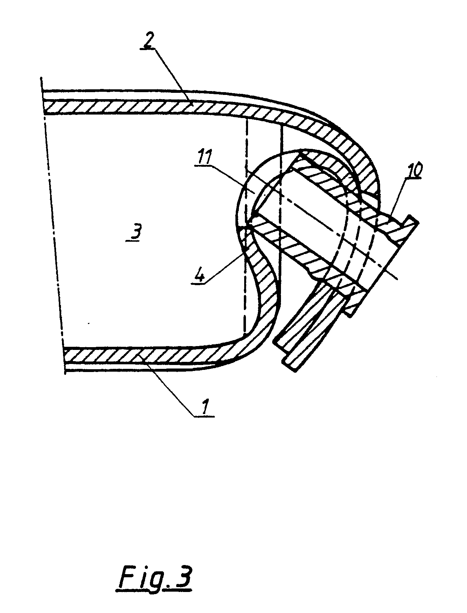

Der Rammschutzträger besitzt an seinen beiden vertikalen Seiten die Begrenzungsflansche 1 und 2. Der Teil 3 zwischen den Flanschen kann als Steg oder als Hohlprofil ausgebildet sein. Im Bereich des Endes des Trägers ist die Befestigung 5 angeordnet. Der verbleibende Flansch 4 ist zum anderen inneren Flansch 2 hin gebogen, steht etwa normal auf die Längsachse 8 und ist in seinem weiteren, zum Ende gehenden Verlauf am anderen inneren Flansch 2 anliegend. Dieser Bereich ragt über die Kontur des inneren Flansches und besitzt in diesem Teil einen etwa zur Längserstreckung parallelen Verlauf. Der Teil, der die Befestigung 5 aufnimmt, ist zur Außenseite hin gebogen und steht in einem spitzen Winkel zur Längsachse des Rammschutzträgers. Bei der Verformung des Trägers, wie in Fig. 3 ersichtlich, wird dieser Teil an den verbleibenden Flansch 4 gedrückt und die Hülse 10 in die Öffnung 11 geschoben, verklemmt und stützt sich somit am verbleibenden Flansch 4 ab. Dadurch weicht der Rammschutzträger nach innen aus und der Bereich der aneinanderliegenden Flansche wird auseinander gezogen. Durch die Aufnahmebohrung der Hülse 10 bricht der innere Flansch 2 und ermöglicht ein weiteres Nachgeben des Rammschutzträgers.

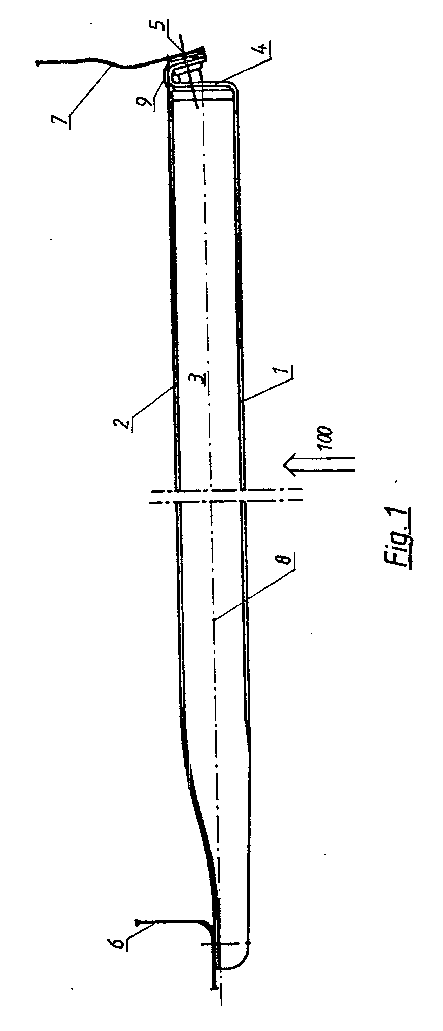

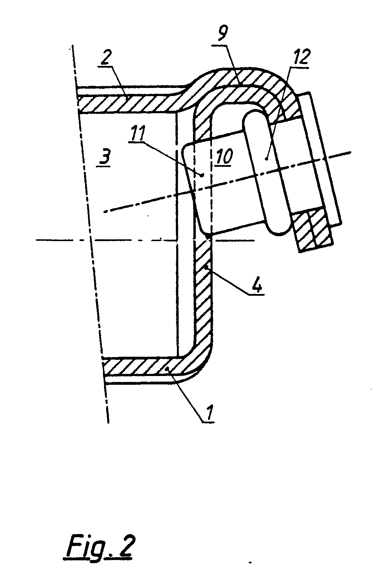

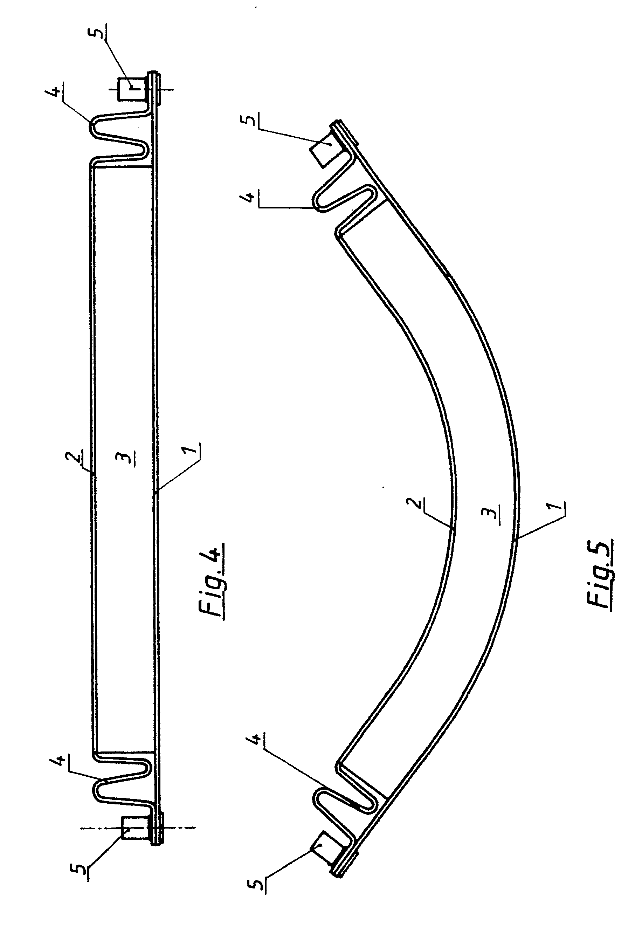

In Fig. 4 ist eine Variante gezeigt, bei der der äußere Flansch wellenförmig an den Enden hin- und hergeführt ist, sodaß noch mehr Verformung aufgenommen werden kann. Der Bruch des inneren Flansches erfolgt hier ebenfalls im Bereich der Aufnahme der Befestigung 5, bzw. wenn die Befestigung als Hülse 10, wie in den Fig. 1 bis 3 ausgeführt ist, unter dieser.

**Ansprüche**

1. Rammschutzträger für Kraftfahrzeugtüren und Seitenwände, der an seiner der Türaußenwand zu- und abgewandten Längsseite Begrenzungsflansche aufweist, dadurch gekennzeichnet, daß wenigstens an einem Trägerende der zwischen den Begrenzungsflanschen (1, 2) befindliche Teil des Trägers entfernt ist, mindestens einer der verbleibenden Flansche (4) zum anderen hin gebogen und im weiteren zum Ende hin gehenden Verlauf der Flansche die zueinander weisenden Längsflächen der beiden Flanschen aneinander liegen und in diesem Bereich die Befestigung für den Türrahmen (6, 7) angeordnet ist.

2. Rammschutzträger nach Anspruch 1, dadurch gekennzeichnet, daß der die Befestigung aufnehmende Teil der aneinanderliegenden Flansche (9) vom innenliegenden Begrenzungsflansch (1, 2) wegweist.

3. Rammschutzträger nach einem der vorhergehenden Ansprüche, dadurch gekennzeichnet, daß der zum anderen Flansch hin gebogene verbleibende Teil des äußeren Flansches (1) normal auf die Längsachse (8) steht und die Kontur der aneinander liegenden Bereiche der Flansche (9) in ihren gemeinsamen zum Ende des Rammschutzträgers gehenden Verlauf zuerst über die äußere Kontur des inneren Flansches (2) ragt und in diesen Bereich einen zur Längserstreckung etwa parallelen Verlauf hat.

4. Rammschutzträger nach einem der vorhergehenden Ansprüche, dadurch gekennzeichnet, daß der verbleibende äußere Flansch (1) im Bereich des entfernten Teiles in einer zur Längserstreckung des Trägers parallelen Wellenform gebogen ist und im weiteren zum Ende gehenden Verlauf am anderen zur Längsachse (8) parallel laufenden Flansches anliegt.

5. Rammschutzträger nach einem der vorhergehenden Ansprüche, dadurch gekennzeichnet, daß nach dem zur Längserstreckung etwa parallelelen Verlauf der aneinanderliegenden Flansche (9) diese gemeinsam zum Außenflansch (1) hin gebogen sind und in einem spitzen Winkel zur Längsachse (8) des Rammschutzträgers stehen.

6. Rammschutzträger nach einem der vorhergehenden Ansprüche, dadurch gekennzeichnet, daß die Befestigung (5) aus einer Hülse (10) mit Gewinde besteht, die in dem im spitzen Winkel zur Längsachse (8) stehenden Teil der aneinander zu liegen kommenden Flanschteile (9) formschlüssig angeordnet ist.

7. Rammschutzträger nach einem der vorhergehenden Ansprüche, dadurch gekennzeichnet, daß im zum Außenflansch (1) gebogenen Teil Kerben oder Schlitze am Innenflansch (2) angeordnet sind, die sich zwischen den zur Längserstreckung parallelen Verlauf der aneinanderliegenden Flansche (9) und der Befestigung (5) befinden.

8. Rammschutzträger nach einem der vorhergehenden Ansprüche, dadurch gekennzeichnet, daß die Hülse (10) der Befestigung (5) den normal auf die Längserstreckung stehenden Teil des Außenflansches (1) in etwa berührt oder in eine Öffnung (11) im verbleibenden Flansch (4) ragt.

_Fig. 1_

EP 0 407 372 A1

_Fig. 2_

_Fig.3_

_Fig.4_

_Fig.5_

EP 0 407 372 A1

_Fig.6_

EP 0 407 372 A1

Europäisches
Patentamt

**EUROPÄISCHER RECHERCHENBERICHT**

Nummer der Anmeldung

EP 90890186.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| D,A | <u>FR - A - 2 207 039</u><br>(RENAULT)<br>   * Fig. 2,3 *<br>   -- | 1 | B 60 R 19/42<br>B 60 J  5/04 |
| A | <u>US - A - 4 090 734</u><br>(INAMI)<br>   * Fig.; Zusammenfassung *<br>   -- | | |
| A | <u>US - A - 3 829 149</u><br>(STEVENS)<br>   * Fig.; Zusammenfassung *<br>   ---- | | |

RECHERCHIERTE
SACHGEBIETE (Int Cl⁵)

B 60 R
B 60 J

Der vorliegende Recherchenbericht wurde für alle Patentansprüche erstellt.

| Recherchenort | Abschlußdatum der Recherche | Prüfer |
|---|---|---|
| WIEN | 18-09-1990 | PANGRATZ |